# EUROPÄISCHE PATENTSCHRIFT

(11) **EP 2 676 993 B1**
(45) Veröffentlichungstag und Bekanntmachung des Hinweises auf die Patenterteilung: **04.03.2015**
(21) Anmeldenummer: 12172710.1
(22) Anmeldetag: 20.06.2012
(51) Int. Cl.: C08K 3/00

(54) **Bauteil mit einer die Haftung vermindernden Schicht und Verfahren zu dessen Herstellung**
Component with a coating that reduces adhesion and method for producing same
Composant avec une couche réduisant l'adhérence et son procédé de fabrication

(43) Veröffentlichungstag der Anmeldung: 25.12.2013
(73) Patentinhaber: Siemens Aktiengesellschaft, 80333 München (DE)
(72) Erfinder: Jensen, Jens Dahl, 14050 Berlin (DE); Nielsen, Per, 9310 Vodskov (DK); Poulsen, Peter Møller, 9700 Nørresundby (DK); Schneider, Manuela, 13581 Berlin (DE)

(56) Entgegenhaltungen:
- DE-U1- 29 719 716
- US-A1- 2008 038 871
- US-A1- 2011 083 885
- DATABASE WPI Week 199514 Thomson Scientific, London, GB; AN 1995-101419 XP002686805, & JP 7 024838 A (HONDA MOTOR CO LTD) 27. Januar 1995 (1995-01-27)

## Beschreibung

Die Erfindung betrifft ein Bauteil mit einer die Haftung vermindernden Schicht, die zumindest eine die Haftung vermindernde Oberfläche zur Verfügung stellende Decklage aufweist. Diese Decklage weist wiederum eine metallische Matrix auf, in der Partikel aus einem Kunststoff eingelagert sind, die zumindest einen Teil der Oberfläche bilden. Außerdem betrifft die Erfindung ein Verfahren zur Herstellung eines solchen Bauteils.

Bauteile mit die Haftung vermindernden Schichten sind bekannt. Beispielsweise ist in der DE 297 19 716 U1 ein solches Bauteil offenbart, welches als Trennblech für die Fertigung von mehrlagigen harzgebundenen Leiterplatten zum Einsatz kommt. Diese Leiterplatten müssen während ihres Herstellungsprozesses verpresst werden, wobei die Werkzeuge zum Verpressen nach der erfolgten Herstellung der Leiterplatten möglichst einfach von diesen entfernt werden sollen. Hierbei kommen die genannten Trennbleche zum Einsatz. Diese Trennbleche weisen eine Dispersionsschicht auf, die eine Matrix aus Nickel zur Verfügung stellt. In diese Matrix sind Partikel aus Teflon (Polytetrafluorethylen) eingebracht, die auch einen Teil der Oberfläche bilden. Die Schicht kann zur Verbesserung der Antihaft-Eigenschaften zusätzlich einer Wärmebehandlung unterzogen werden, wobei zumindest die an der Oberfläche befindlichen Teflonpartikel aufgeschmolzen werden und hierdurch ihre Form und ihre Gefügeeigenschaften verändern.

Außerdem ist es gemäß der US 2011/0083885 A1 bekannt, dass Nickelbeschichtungen auf Kunststoffteilen dadurch hergestellt werden können, dass katalytische Partikel in einem elektrisch isolierenden Schichtverbund eingebracht werden, die bei einer anschließenden stromlosen Beschichtung mit Nickel die Nickelionen in dem Beschichtungselektrolyt reduzieren und dadurch zur Ausbildung von Keimen zur Schichtbildung führen. Diese Keime wachsen anschließend zu der auszubildenden Beschichtung zusammen.

Die Aufgabe der Erfindung besteht darin, ein Bauteil mit einer die Haftung vermindernden Schicht sowie ein Verfahren zu dessen Herstellung anzugeben, mit dem auch vergleichsweise große Bauteile hergestellt werden können. Durch die Bindung des genannten Verfahrens an einen Elektrolyt ist die Bauteilgröße zwangsläufig auf die Badgröße begrenzt. Auch eine anschließende Wärmebehandlung erfordert gewöhnlich einen geeigneten Ofen, dessen Abmessungen die Bauteilgröße begrenzen.

Diese Aufgabe wird mit dem eingangs genannten Bauteil erfindungsgemäß dadurch gelöst, dass das Bauteil aus einem Kunststoff besteht und auf diesem eine Startlage für das stromlose Beschichten mit Metall aufgebracht ist. Diese Startlage weist eine Matrix aus einem Kunstharz auf, in der metallische Partikel als Keime für das stromlose Beschichten eingelagert sind. Diese Keime eignen sich erfindungsgemäß dafür, dass ein stromloses metallisches Beschichten auch auf einem Kunststoffteil zur Erzeugung der die Haftung vermindernden Schicht verwendet werden kann. Als haftungsvermindernd sollen im Zusammenhang mit dieser Erfindung Schichten verstanden werden, die selbst eine geringere Haftung von Medien an der Oberfläche des beschichteten Bauteils erzeugen, als verglichen mit dem unbeschichteten Bauteil. Damit ist durch die Beschichtung der Effekt einer Haftungsverminderung zu verzeichnen.

Als metallische Matrix kommt bevorzugt Nickel zum Einsatz. Hierbei handelt es sich um ein Metall, was im Vergleich zu anderen Metallen eine Oberfläche mit an sich guten Haftungseigenschaften zur Verfügung stellt. Selbstverständlich sind allerdings auch andere metallische Matrixwerkstoffe möglich, beispielsweise Werkstoffe auf Eisenbasis (z. B. Edelstahl). Als Kunststoff kommt insbesondere Polytetrafluorethylen (Teflon) zum Einsatz, dessen haftungsvermindernde Eigenschaften hinlänglich bekannt sind. Auch hier sind insbesondere abhängig vom Einsatzfall andere Kunststoffe denkbar wie z. B. Nylon.

Die Möglichkeit, auch Bauteile aus Kunststoff mit Schichten zu versehen, die die Haftung vermindern, macht vorteilhaft den Einsatz der Beschichtungen im Formenbau möglich. Die Formen können allerdings nicht in einem Bad beschichtet werden, weil diese im Allgemeinen zu große Abmessungen aufweisen. Insbesondere bei dem Bau von Windkraftanlagen müssen die aus Kunststoff gefertigten Rotorblätter in einem Stück erzeugt werden. Dies macht Formen erforderlich, in denen das Rotorblatt in seiner kompletten Länge hergestellt werden kann. Das erfindungsgemäße Bauteil könnte als eine solche Form verwendet werden. Die Beschichtung muss dann beispielsweise durch Brush-Plating erzeugt werden, wobei der Elektrolyt bei diesem Verfahren mittels einer Bürste oder einem schwammartigen Gebilde auf die Oberfläche des Bauteils aufgebracht wird.

Außerdem wird die Aufgabe mit dem eingangs genannten Verfahren erfindungsgemäß dadurch gelöst, dass auf dem Bauteil eine Startlage mit einer Matrix aus einem Kunstharz aufgebracht wird, wobei in der Matrix metallische Partikel als Keime für ein anschließendes stromloses elektrochemisches Beschichten eingelagert werden. Im nächsten Schritt wird auf der Startlage chemisch oder elektrochemisch zumindest eine die Haftung vermindernde Oberfläche zur Verfügung stellende Decklage hergestellt, wobei die Decklage eine metallische Matrix aufweist, in der Partikel aus einem Kunststoff eingelagert sind, die zumindest einen Teil der Oberfläche bilden. Dies kann in der bereits beschriebenen Weise beispielsweise mittels Brush-Plating erfolgen. Dabei können auch große Bauteile, wie z. B. die Formen für die Rotorblätter von Windkraftanlagen, beschichtet werden.

Das erfindungsgemäße Verfahren kann überdies vorteilhaft ausgestaltet werden, wenn die Decklage einer Wärmebehandlung unterworfen wird, indem die Oberfläche mit Heißluft beaufschlagt wird, bis die Partikel aus Kunststoff zumindest an der Oberfläche angeschmolzen werden. Durch die Wärmebehandlung lässt sich das haftungsvermindernde Verhalten der Schicht vorteilhaft weiter verbessern. Durch das Anschmelzen der Partikel werden diese geglättet und können sich auch teilweise auf der metallischen Oberfläche, die durch die Matrix der Decklage gebildet wird, ausbreiten. Abhängig vom Abstand der durch die Oberfläche der Matrix herausragenden Partikel können jeweils benachbarte Partikel durch die Wärmebehandlung auch zusammengeschlossen werden. Bei einer genügend dichten Verteilung der Partikel an der Oberfläche lässt sich sogar eine zumindest im Wesentlichen geschlossene Teflonschicht herstellen, welche durch die stabile Matrix der Decklage mechanisch unterstützt und verstärkt wird. Hierbei wird der Vorteil der Metall-Kunststoff-Materialkombination in besonderer Weise ausgenutzt, wobei diese Werkstoffpaarung nicht nur günstige Eigenschaften einer Haftungsverminderung zur Verfügung stellen, sondern auch einer hohen Stabilität gegen mechanische Beanspruchung wie Flächenpressung und Abrasion. Daher ist diese Materialpaarung im besonderen Maße für den Formenbau geeignet.

Gemäß einer vorteilhaften Ausgestaltung der Erfindung ist das Bauteil aus einem Polyester-Material oder einem Vinyl-Ester-Material oder einem Epoxy-Material gefertigt. Diese Materialien bieten ein vergleichsweise stabiles Substrat für die Aufbringung der Schicht, insbesondere können diese Materialien vorteilhaft mit Fasern verstärkt werden, um die Stabilität noch zu verbessern. Andererseits handelt es sich hierbei um vergleichsweise kostengünstige Materialien, so dass auch große Formen wie z. B. diejenigen für die Rotorblätter von Windkraftwerken kostengünstig hergestellt werden können. Um eine bessere Haftung des Schichtverbundes auf dem Grundwerkstoff des Bauteils zu erzielen, kann es auch vorteilhaft sein, wenn das Bauteil einen mit den Fasern verstärkten Kernbereich und einen unverstärkten Randbereich aufweist, wobei der Randbereich die Grenzfläche zur Schicht ausbildet. Dies bedeutet, dass die Schicht nicht mit den Fasern des Bauteils in Berührung kommt, wodurch die Bindung zwischen dem Bauteil und der Startlage vorteilhaft verbessert wird.

Vorteilhaft können die metallischen Partikel in der Startlage aus Palladium und/oder Kupfer und/oder Nickel und/oder Eisen bestehen. Diese Metalle eignen sich vorteilhaft im besonderen Maße dazu, eine Keimbildung für eine anschließende stromlose Metallabscheidung katalytisch zu unterstützen. Insbesondere lassen sich mit diesen Katalysatormetallen Schichten aus Nickel abscheiden.

Vorteilhaft ist es weiterhin, wenn der Volumenanteil an metallischen Partikeln im Verhältnis zum Kunstharz der Matrix in der Startlage mindestens 60 und höchstens 85 % beträgt. Bei einem derartigen Füllgrad wird einerseits noch gewährleistet, dass die Matrix aus dem Harzwerkstoff die metallischen Partikel zuverlässig bindet. Andererseits bestehen an der Oberfläche der Startlage aber auch genügend metallische Partikel als Keimbildner zur Verfügung, so dass eine anschließende stromlose Beschichtung in wirtschaftlich hinnehmbarer Zeit erzeugt werden kann.

Vorteilhaft weist die Decklage eine Dicke von mindestens 5 und höchstens 15 µm auf. Hierbei ist aus technischer Sicht ein Kompromiss zu finden, der in diesem Dickenbereich gewährleistet ist. Zu berücksichtigen ist einerseits, dass die Schicht genügend dick sein muss, damit bei einer anschließenden Wärmebehandlung die thermische Belastung des Bauteils aus Kunststoff durch Ableitung der Wärme in die Decklage verringert werden kann. Hierzu sind möglichst dicke Lagen vorzusehen. Andererseits darf die Decklage aufgrund von Eigenspannungen während der Wärmebehandlung nicht abplatzen. Daher darf die Decklage eine Dicke von 15 µm nicht überschreiten. Außerdem würden dickere Schichten auch teurer in der Herstellung sein (mehr Material, längere Herstellungszeit), so dass dickere Schichten in ihrer Herstellung unwirtschaftlicher wären. Zuletzt darf aufgrund der Anforderung an die mechanische Stabilität der Decklage die Schichtdicke nicht unter 6 µm betragen.

Vorteilhaft kann zwischen der Startlage und der Decklage auch eine metallische Zwischenlage vorgesehen werden. Diese Zwischenlage ist vorteilhaft kostengünstiger in ihrer Herstellung, als die mit den Partikeln aus Kunststoff versehene Decklage. Daher können vorteilhaft auch größere Schichtdicken kostengünstig hergestellt werden. Außerdem verbessert eine Zwischenlage aus reinem Nickel oder einem anderen Metall die Haftung der Decklage auf der Startlage.

Weitere Einzelheiten der Erfindung werden nachfolgend anhand der Zeichnung beschrieben. Gleiche oder sich entsprechende Zeichnungselemente sind in den einzelnen Figuren jeweils mit den gleichen Bezugszeichen versehen und werden nur insoweit mehrfach erläutert, wie sich Unterschiede zwischen den einzelnen Figuren ergeben. Es zeigen:
- Figur 1: ein Ausführungsbeispiel des erfindungsgemäßen Bauteils als schematischen Ausschnitt,
- Figur 2: den Ausschnitt II aus Figur 1 in der Darstellung vor und nach der Wärmebehandlung gemäß eines Ausführungsbeispiels des erfindungsgemäßen Verfahrens und
- Figur 3: ein Formwerkzeug für das Rotorblatt einer Windkraftanlage als Ausführungsbeispiel des erfindungsgemäßen Bauteils als dreidimensionale Darstellung, teilweise aufgeschnitten.

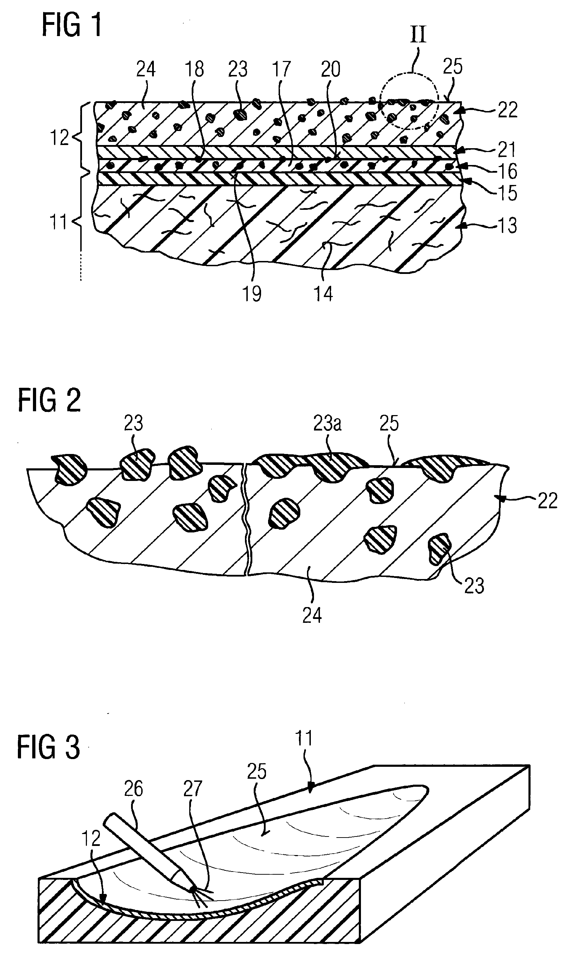

Der Figur 1 lässt sich als Ausschnitt ein Bauteil 11 entnehmen, welches mit einer die Haftung vermindernden Schicht 12 versehen ist. Das Bauteil besteht aus einem Kernbereich 13, wobei dieser Kernbereich 13 mit Fasern 14 verstärkt ist. An den Kernbereich 13 schließt sich ein Randbereich 15 an, wobei dieser sich von dem Kernbereich nur dadurch unterscheidet, dass dieser nicht mit Fasern verstärkt ist. In Figur 1 ist das Bauteil zweistufig hergestellt, so dass der Randbereich 15 eine eigene Lage darstellt. Es ist jedoch auch möglich, Kernbereich und Randbereich in einem Herstellungsschritt herzustellen, wenn gewährleistet ist, dass die Fasern nicht bis an die Oberfläche des Bauteils heran reichen. Definitionsgemäß gehören aber Kernbereich 13 und Randbereich 15 zum Bauteil.

Auf dem Bauteil 11 befindet sich die Schicht 12. Diese besteht in Figur 1 aus drei Lagen. Auf dem Bauteil befindet sich zunächst eine Startlage 16, die aus einer Matrix 17 aus Kunststoff und aus in dieser Matrix eingelagerten metallischen Partikeln 18 besteht. Die Grenzfläche 19 zwischen dem Bauteil 11 und der Startlage 16 ist frei von Fasern 14, da der Randbereich 15, wie bereits erwähnt, keine Fasern aufweist. Metallische Partikel 18 in der Startlage 16 berühren jedoch die Grenzfläche 20 zwischen der Startlage und einer Zwischenlage 21 aus Nickel. Diese metallischen Partikel 18 an der Grenzfläche 20 bilden nämlich die Keime für eine stromlose Abscheidung des Nickels der Zwischenlage 21. Die anschließende Decklage 22 wird dann ebenfalls stromlos (oder alternativ auf der bereits leitenden Zwischenlage 20 auch galvanisch) abgeschieden, wobei während der chemischen oder elektrochemischen Abscheidung in dem Elektrolyt dispergierte Partikel 23 aus Kunststoff in die sich ausbildende metallische Matrix 24 eingelagert werden. Diese Partikel 23 liegen durch die Decklage 22 gebildeten Oberfläche 25 frei, wobei dort ein Effekt der Haftungsverminderung der Oberfläche 25 durch die Partikel 23 aus Kunststoff gewährleistet ist. Dieser bleibt auch erhalten, wenn die Decklage einem Verschleiß unterworfen ist, da bei einem Abtrag der Decklage 22 die im Inneren der Matrix 24 liegenden Partikel 23 aus Kunststoff freigelegt werden. Bei einem fortschreitenden Verschleiß der Decklage 22 kann eine nachfolgende Wärmebehandlung die Haftungseigenschaften der verschlissenen Decklage 22 wieder verbessern.

In Figur 2 ist zu erkennen, wie durch eine Wärmbehandlung der Effekt einer Haftungsverminderung der Oberfläche 25 erreicht wird. Der Teil der Oberfläche 25 der Decklage 22 vor der Wärmebehandlung ist links der Bruchlinie dargestellt. Es fällt auf, dass die die Oberfläche 25 durchstoßenden Partikel 23 eine im Wesentlichen runde Form aufweisen. Rechts der Bruchlinie sind die Partikel 23a an der Oberfläche 25 nach der Wärmebehandlung dargestellt. Diese weisen eine glattere Oberfläche auf. Benachbarte Partikel 23a haben sich soweit verformt, dass diese zusammengewachsen sind und in diesem Bereich eine einheitliche Oberfläche darstellen. Insgesamt steht damit ein geringerer Teil der Oberfläche des Matrixwerkstoffes 24 zur Verfügung. Je nach Dichte der Partikel 23a kann auch eine weitgehende Versiegelung der Oberfläche 25 erfolgen. Dies kann abhängig vom Anwendungsfall von Vorteil sein.

In Figur 3 ist eine Formschale als Bauteil 11 für die Herstellung einer Hälfte des Rotorblattes einer Windkraftanlage (nicht dargestellt) zu erkennen. Diese Formhälfte wird in nicht dargestellter Weise durch eine weitere Formhälfte ergänzt, so dass das Rotorblatt in einem Stück hergestellt werden kann. Dabei kommt auch ein ebenfalls nicht dargestellter Kern zum Einsatz. Das dargestellte Bauteil 11 (sowie die nicht dargestellten weiteren Formteile) ist mit der erfindungsgemäßen Schicht 12 gemäß Figur 1 ausgestattet. In Figur 3 ist ein Nachbehandlungsschritt dargestellt, wo die Wärmebehandlung der Oberfläche 25 mittels einer Düse 26 erfolgt. Aus der Düse strömt Heißluft 27, die die Oberfläche lokal erwärmt, so dass es zu einer Ausbildung der Partikel aus Kunststoff 23a gemäß Figur 2 kommt. Gleichzeitig dauert die lokale Wärmebehandlung durch die Heißluft 27 nicht lange genug, um das Kunststoffmaterial des Bauteils 11 zu beschädigen. Hierbei leisten auch die Decklage 22 sowie die Zwischenlage 21 Hilfestellung, da sie zumindest im Wesentlichen metallisch sind und daher zu einer guten Wärmeableitung der lokalen Wärmebehandlung führen.

## Patentansprüche

1. Bauteil mit einer die Haftung vermindernden Schicht (12), die zumindest eine die Haftung vermindernde Oberfläche (25) zur Verfügung stellende Decklage (22) aufweist, wobei die Decklage
• eine metallische Matrix (24) aufweist,
• in der Partikel (23) aus einem Kunststoff eingelagert sind, die zumindest einen Teil der Oberfläche (25) bilden
**dadurch gekennzeichnet, dass**
das Bauteil aus einem Kunststoff besteht und auf diesem eine Startlage (16) für das stromlose Beschichten mit Metall aufgebracht ist, wobei die Startlage
• eine Matrix (17) aus einem Kunstharz aufweist,
• in der metallische Partikel (18) als Keime für das stromlose Beschichten eingelagert sind.

2. Bauteil nach Anspruch 1,
**dadurch gekennzeichnet, dass**
das Bauteil aus einem Polyester-Material oder einem Venylester-Material oder einem Epoxy-Material besteht.

3. Bauteil nach Anspruch 2,
**dadurch gekennzeichnet, dass**
das Bauteil mit Fasern (14) verstärkt ist.

4. Bauteil nach Anspruch 3,
**dadurch gekennzeichnet, dass**
das Bauteil einen mit den Fasern (14) verstärkten Kernbereich (13) und einen unverstärkten Randbereich (15) aufweist, wobei letzterer die Grenzfläche zur Schicht (12) ausbildet.

5. Bauteil nach einem der vorangehenden Ansprüche,
**dadurch gekennzeichnet, dass**
die metallischen Partikel (18) in der Startlage (16) aus Palladium und/oder Kupfer und/oder Nickel und/oder Eisen bestehen.

6. Bauteil nach einem der vorangehenden Ansprüche,
**dadurch gekennzeichnet, dass**
der Volumenanteil an metallischen Partikeln (18) im Verhältnis zum Kunstharz der Matrix (17) in der Startlage (16) mindestens 60 und höchstens 85 % beträgt.

7. Bauteil nach einem der vorangehenden Ansprüche,
**dadurch gekennzeichnet, dass**
die Decklage eine Dicke von mindestens 5 und höchstens 15 µm aufweist.

8. Bauteil nach einem der vorangehenden Ansprüche,
**dadurch gekennzeichnet, dass**
zwischen der Startlage (16) und der Decklage (22) eine metallische Zwischenlage (21) vorgesehen ist.

9. Bauteil nach einem der vorangehenden Ansprüche,
**dadurch gekennzeichnet, dass**
zumindest die an der Oberfläche (25) der Decklage (22) liegenden Partikel (23) aus dem Kunststoff wärmebehandelt sind.

10. Verfahren zur Herstellung eines Bauteils (11) aus Kunststoff mit einer die Haftung vermindernden Schicht (12) mit den folgenden Arbeitsschritten:
• auf dem Bauteil (11) wird eine Startlage (16) mit einer Matrix aus einem Kunstharz aufgebracht, wobei in der Matrix metallische Partikel (18) als Keime für ein anschließendes stromloses Beschichten eingelagert sind,
• auf der Startlage (16) wird chemisch oder elektrochemisch zumindest eine die Haftung vermindernde Oberfläche (25) zur Verfügung stellende Decklage (22) hergestellt, wobei die Decklage eine metallische Matrix (24) aufweist, in der Partikel (23) aus einem Kunststoff eingelagert sind, die zumindest einen Teil der Oberfläche (25) bilden.

11. Verfahren nach Anspruch 10,
**dadurch gekennzeichnet, dass**
die Decklage (22) einer Wärmebehandlung unterworfen wird, indem die Oberfläche (25) mit Heißluft beaufschlagt wird, bis zumindest die Partikel (23) aus Kunststoff an der Oberfläche angeschmolzen werden.

## Claims

1. Component comprising an adhesion-reducing coating (12) which has at least one top layer (22) that provides the adhesion-reducing surface (25), wherein the top layer
• has a metallic matrix (24)
• in which particles (23) of a plastic which form at least part of the surface (25) are incorporated,
**characterized in that**
the component consists of a plastic and a starting layer (16) for electroless coating with metal is applied thereto, wherein the starting layer
• has a matrix (17) made of a synthetic resin
• in which metallic particles (18) are incorporated as nuclei for the electroless coating.

2. Component according to Claim 1,
**characterized in that**
the component consists of a polyester material or a vinyl ester material or an epoxy material.

3. Component according to Claim 2,
**characterized in that**
the component is reinforced with fibres (14).

4. Component according to Claim 3,
**characterized in that**
the component has a core region (13) reinforced with the fibres (14) and a non-reinforced marginal region (15), the latter forming the interface to the coating (12).

5. Component according to one of the preceding claims,
**characterized in that**
the metallic particles (18) in the starting layer (16) consist of palladium and/or copper and/or nickel and/or iron.

6. Component according to one of the preceding claims,
**characterized in that**
the proportion of metallic particles (18) by volume in relation to the synthetic resin of the matrix (17) in the starting layer (16) is at least 60 and at most 85%.

7. Component according to one of the preceding claims,
**characterized in that**
the top layer has a thickness of at least 5 and at most 15 µm.

8. Component according to one of the preceding claims,
**characterized in that**
a metallic intermediate layer (21) is provided between the starting layer (16) and the top layer (22).

9. Component according to one of the preceding claims,
**characterized in that**
at least those particles (23) of the plastic which lie at the surface (25) of the top layer (22) are heat-treated.

10. Method for producing a component (11) made of plastic having an adhesion-reducing coating (12), said method comprising the following working steps:
• a starting layer (16) having a matrix made of a synthetic resin is applied to the component (11), wherein metallic particles (18) are incorporated in the matrix as nuclei for subsequent electroless coating,
• at least one top layer (22) that provides the adhesion-reducing surface (25) is produced on the starting layer (16) by a chemical or electrochemical process, wherein the top layer has a metallic matrix (24) in which particles (23) of a plastic which form at least part of the surface (25) are incorporated.

11. Method according to Claim 10,
**characterized in that**
the top layer (22) is subjected to a heat treatment by applying hot air to the surface (25) until at least the particles (23) of plastic at the surface are melted.

## Revendications

1. Composant ayant une couche ( 12 ), qui diminue l'adhérence et qui a au moins une strate ( 22 ) de recouvrement mettant à disposition une surface ( 25 ) diminuant l'adhérence, dans lequel la couche de recouvrement
• comporte une matrice ( 24 ) métallique,
• dans laquelle sont incorporées des particules ( 23 ) en une matière plastique, qui forment au moins une partie de la surface ( 25 ),
**caractérisé en ce que**
le composant est en une matière plastique et il est déposé sur celle-ci une strate ( 16 ) de commencement pour le revêtement sans courant par du métal, la strate de commencement
• ayant une matrice ( 17 ) en une résine synthétique,
• dans laquelle des particules ( 18 ) métalliques sont incorporées sous forme de germes pour le revêtement sans courant.

2. Composant suivant la revendication 1,
**caractérisé en ce que**
le composant est en une matière de polyester ou en une matière d'ester vinylique ou en une matière époxy.

3. Composant suivant la revendication 2,
**caractérisé en ce que**
le composant est renforcé par des fibres ( 14 ).

4. Composant suivant la revendication 3,
**caractérisé en ce que**
le composant a une région ( 13 ) de coeur renforcée par les fibres ( 14 ) et une région ( 15 ) de bord non renforcée, cette dernière formant la surface limite par rapport à la couche ( 12 ).

5. Composant suivant l'une des revendications précédentes,
**caractérisé en ce que**
les particules ( 18 ) métalliques de la couche ( 16 ) de commencement sont en palladium et/ou en cuivre et/ou en nickel et/ou en fer.

6. Composant suivant l'une des revendications précédentes,
**caractérisé en ce que**
la proportion en volume des particules ( 18 ) métalliques par rapport à la résine synthétique de la matrice ( 17 ) de la couche (16 ) de commencement est d'au moins 60 et d'au plus 85 %.

7. Composant suivant l'une des revendications précédentes,
**caractérisé en ce que**
la strate de couverture a une épaisseur d'au moins 5 et d'au plus 15 µm.

8. Composant suivant l'une des revendications précédentes,
**caractérisé en ce que**
une strate ( 21 ) intermédiaire métallique est prévue entre la strate ( 16 ) de commencement et la strate ( 22 ) de couverture.

9. Composant suivant l'une des revendications précédentes,
**caractérisé en ce que**
au moins les particules ( 23 ) en matière plastique se trouvant à la surface ( 25 ) de la strate ( 22 ) de couverture sont traitées thermiquement.

10. Procédé de fabrication d'un composant ( 11 ) en matière plastique ayant une couche ( 12 ) diminuant l'adhérence, comprenant les stades de traitement suivants :
• on dépose sur le composant ( 11 ) une strate ( 16 ) de commencement ayant une matrice en une résine synthétique, des particules ( 18 ) métalliques étant incorporées dans la matrice comme germes pour un revêtement sans courant à venir ensuite,
• on produit sur la strate ( 16 ) de commencement chimiquement ou électrochimiquement au moins une strate ( 22 ) de couverture mettant à disposition une surface ( 25 ) diminuant l'adhérence, la strate de couverture ayant une matrice ( 24 ) métallique, dans laquelle sont incorporées des particules ( 23 ) en une matière plastique, qui forment au moins une partie de la surface ( 25 ).

11. Procédé suivant la revendication 10,
**caractérisé en ce que**
on soumet la strate ( 22 ) de couverture à un traitement thermique en soumettant notamment la surface ( 25 ) à de l'air chaud jusqu'à fusion d'au moins les particules ( 23 ) en matière plastique à la surface.
